**Europäisches Patentamt**

**European Patent Office**

**Office européen des brevets**

(19)

(11) **EP 1 134 579 A2**

(12) **EUROPÄISCHE PATENTANMELDUNG**

(43) Veröffentlichungstag:
**19.09.2001 Patentblatt 2001/38**

(51) Int Cl.⁷: **G01N 21/84**, G01B 11/06

(21) Anmeldenummer: **01105579.5**

(22) Anmeldetag: **06.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.03.2000 DE 10013172**

(71) Anmelder: **WAGNER INTERNATIONAL AG**
**9450 Altstätten (CH)**

(72) Erfinder:
• **Scheidt, Michael, Dr.**
**9434 Au (CH)**
• **Moser, Hansruedi**
**9452 Hinterforst (CH)**
• **Adams, Horst, Dr.**
**9450 Altstätten (CH)**

(74) Vertreter: **Liesegang, Eva et al**
**Forrester & Boehmert,**
**Franz-Joseph-Strasse 38**
**80801 München (DE)**

(54) **Verfahren und Vorrichtung zur photothermischen Analyse einer Materialschicht, insbesondere zur Schichtdickenmessung**

(57)    Die Erfindung betrifft ein Verfahren zur photothermischen Analyse einer Materialschicht (12), insbesondere zur Schichtdickenmessung, bei dem die Oberfläche einer ersten Materialschicht (16) mit elektromagnetischer Strahlung (S) angeregt und von der Schichtoberfläche emittierte Wärmestrahlung (T) mit einem ersten Temperaturverlauf erfaßt wird, die Oberfläche einer zweiten Materialschicht (14) angeregt und von der Schichtoberfläche emittierte Wärmestrahlung mit einem zweiten Temperaturverlauf erfaßt wird, wobei die erste Materialschicht eine Referenzschicht und die zweite Materialschicht die zu analysierende Materialschicht ist. Ein Streckungsfaktor zwischen dem ersten und dem zweiten Temperaturverlauf wird ermittelt, und der Streckungsfaktor wird als eine Kennzahl für das Verhältnis der zu analysierenden Materialschicht zu der Referenzschicht verwendet. Die Erfindung sieht auch eine entsprechende Vorrichtung zur photothermischen Analyse sowie ein Computerprogramm zur Durchführung des Verfahrens vor.

**Fig. 1**

EP 1 134 579 A2

**Beschreibung**

Die Erfindung betrifft ein Verfahren und eine Vorrichtung zur photothermischen Analyse einer Materialschicht, insbesondere zur Schichtdickenmessung, nach dem Oberbegriff von Anspruch 1 bzw. 14.

Es ist bekannt, photothermische Meßverfahren zur berührungslosen Analyse von Materialschichten und insbesondere zur Schichtdickenmessung zu verwenden.

Bei einer üblichen Lösung des Standes der Technik wird eine modulierte, kontinuierlich emittierende Lichtquelle eingesetzt, die eine thermische Welle in dem Meßobjekt anregt. Das zugrundeliegende Prinzip, welches auch als photothermische Radiometrie bekannt ist, basiert auf der Erzeugung von Temperaturwellen in einem Prüfgegenstand, welche sich in einer für die Materialbeschaffenheit des Prüfgegenstandes charakteristischen Weise ausbreiten und ähnlich wie Ultraschallwellen an thermischen Inhomogenitäten, wie Schichtgrenzen, Delaminationen, Rissen, Poren etc., gestreut bzw. reflektiert werden. Wesentliche Unterschiede zu Ultraschallverfahren sind eine stärkere Dämpfung und eine erheblich geringere Ausbreitungsgeschwindigkeit. Die reflektierten bzw. gestreuten Anteile der Temperaturwelle interferieren mit der Ursprungs- oder Anregungswelle und bilden, zum Teil auch nach Mehrfachreflexionen bzw. -streuungen, eine Summenvektor der Temperaturwelle. Dieser beinhaltet als Meßinformation über das zu prüfende Werkstücke einen Vektorbetrag (oder eine Amplitude) sowie eine Phase, wobei der Vektorbetrag wegen seiner starken Abhängigkeit von äußeren Faktoren, wie Meßabstand und Einstrahlwinkel, welche bei einer industriellen Anwendung nicht präzise genug einstellbar sind, nur schlecht verwertbar ist. Die Phase dagegen ist von diesen Parametern, und sogar von der Leistung der intensitätsmodulierten Anregungsstrahlung, weitgehend unabhängig, so daß sie verläßlich ausgewertet werden kann. Aufgrund der Phasenverschiebung der von dem Werkstück emittierten Infrarot-Wärmestrahlung relativ zur eingestrahlten Anregungsstrahlung kann die Beschaffenheit, zum Beispiele Dicke, eine Werkstückoberfläche ermittelt werden. (siehe zum Beispiel DE 195 48 036 C2.)

Um auf der Grundlage der photothermischen Messung die Materialschicht beurteilen und insbesondere die absolute Schichtdicke ableiten zu können, muß vor der Messung das Meßsystem kalibriert werden.

Bei dem oben beschriebenen Verfahren der Analyse der Wärmestrahlung heißt dies, daß einer gemessen Phasenverschiebung eine absolute Schichtdicke zugeordnet werden kann. Ein Kalibrierverfahren gemäß dem Stand der Technik ist im folgenden anhand des Beispiels der Beschichtung von Blechen mit Beschichtungspulver und der Messung der Schichtdicke des Beschichtungspulvers beschrieben:

1. Mindestens zwei Musterbleche werden mit Beschichtungspulver, das später zur Beschichtung der Werkstücke eingesetzt wird, beschichtet. Dabei muß beachtet werden, daß sich die Schichtdicken der zwei Bleche genügend unterscheiden, daß heißt, ein Blech sollte dünn beschichtet und eines dick beschichtet sein. Die beiden gewählten Schichtdicken legen den Meßbereich des Systems fest.

2. Anschließend werden die beiden Musterbleche mit einem photothermischen Meßverfahren ausgemessen. Die gemessenen Signale, daß heißt die abgegebene Wärmestrahlung wird ausgewertet um für jedes Blech eine entsprechende Kennzahl zu ermitteln. Bei dem oben beschriebenen Beispiel ergibt sich die Kennzahl aus der zugehörigen Phasenverschiebung.

3. Das Beschichtungspulver auf den beiden Blechen wird eingebrannt.

4. Mit einem anderen Meßverfahren, z. B. der Wirbelstrommessung, werden die absoluten Schichtdicken der beiden Musterbleche bestimmt.

5. Den auf diese Weise bestimmten absoluten Schichtdicken werden die entsprechenden Kennzahlen (Phasenverschiebungen) zugeordnet. Die Zahlenpaare werden in einer Auswerteeinheit gespeichert, so daß man bei dem beschriebenen Kalibrierverfahren mindestens zwei Stützwerte für eine Kalibrierkurve (Phase vs. Schichtdicke) erhält.

Anhand dieser Kalibrierkurve können nun die gemessenen Kennzahlen (Phasenverschiebungen) der beschichteten Werkstücke einer Schichtdicke zugeordnet werden. Hierzu wird zwischen den Stützpunkten interpoliert, gegebenenfalls auch extrapoliert. Im einfachsten Fall wird eine lineare Interpolation verwendet werden.

Hier wird bereits ein Nachteil des Kalibrierverfahrens des Standes der Technik deutlich. Denn bei der Beschichtung der Musterbleche muß insbesondere darauf geachtet werden, daß sich die Schichtdicken ausreichend unterscheiden, weil die zwei Stützwerte der Kalibrierkurve den Meßbereich definieren. Die beiden Stützwerte dürfen aber auch nicht zu weit auseinander liegen, weil sonst der Fehler bei der Interpolation (oder Extrapolation) zu groß wird.

Ein grundsätzliches Problem bei der Herstellung der Musterbleche besteht darin, daß keine Beschichtung mit einer Schichtdicke, die den nachher herzustellenden Werkstücken entspricht, aufgebracht werden kann, weil die Beschichtung beim Einbrennen schrumpft. Die Bleche müssen daher über- bzw. unterbeschichtet werden.

Um eine ausreichende Meßgenauigkeit zu gewährleisten, kann mit zwei Stützwerten nur ein enger Meßbereich definiert werden. Falls ein größerer Meßbereich abgedeckt werden soll, läßt sich dies nur durch eine Erhöhung der Anzahl der Stützwerte und somit der Musterbleche erreichen. Dadurch steigt der Zeitaufwand für die Kalibrierung des Meßsystems entsprechend.

Ein weiteres Verfahren zur photothermischen Bestimmung der Schichtdicke einer Oberflächenbeschichtung wird in der DE 195 20 788 A1 beschrieben. Bei diesem Verfahren werden eine Oberflächenbeschichtung und ein schichtfreies Substrat mit einem Lichtimpuls angeregt, wobei die Impulsdauer so gewählt wird, daß die Differenz der Temperaturverläufe der Oberflächenbeschichtung und des unbeschichteten Substrats maximal wird. Als charakteristische Größe zur Bewertung der Oberflächenbeschaffenheit wird die Zeit, bei der die maximale Temperatur $T_0$ auf eine Temperatur $T = T_0 \cdot e^{-1}$ abgefallen ist, verwendet. Dadurch ergeben sich jedoch im wesentlichen die gleichen Nachteile wie oben beschrieben, wobei für die einzelnen Messungen eine relativ lange Meßzeit notwendig ist. Zu dem ist die Bestimmung dieses Zeitpunkts wegen des Rauschens kritisch und mit großen meßtechnischen Unsicherheiten behaftet.

In der DE-195 20 788 A1 ist noch ein weiteres Kalibrierverfahren beschrieben, bei dem die gemessenen Temperaturverläufe der zu prüfenden Oberflächen mit abgespeicherten empirisch ermittelten Temperaturverläufen bekannter Schichtdicken verglichen werden. Wenn ein empirischer Temperaturverlauf dem gemessenen Temperaturverlauf entspricht, kann die zugehörige Schichtdicke zugeordnet werden. Für den Fall, daß sich die Kurven nicht entsprechen, ist - in dieser Druckschrift keine Lösung vorgesehen.

Das in der DE 195 20 788 A1 beschriebene Verfahren zum Vergleichen der Temperaturverläufe ist rechentechnisch sehr aufwendig, und es muß für jede Pulversorte ein Satz eigener Vergleichskurven erzeugt und in der Auswerteeinheit gespeichert werden, so daß das beschriebene Verfahren insgesamt mit einem hohen Aufwand zum Einrichten und Kalibrieren des Meßsystems belastet ist.

In der DE 195 20 788 A1 wird weiter vorgeschlagen, die gemessenen Temperaturverläufe mit theoretischen Temperaturverläufen zu vergleichen. Die theoretischen Temperaturverläufe werden mit dem Modell eines sogenannten "thermischen Kondesators" beschrieben, der in dieser Druckschrift detailliert erläutert ist. Wie der Kurvenvergleich erfolgen soll, ist in der DE 195 20 788 AI nicht ausgeführt.

Bei dem beschriebenen Verfahren werden die Temperaturverläufe in der Abkühlphase der Werkstückbeschichtung verglichen. Dies hat eine weiter Verlängerung der Meßzeit zur Folge.

Die beschriebenen Verfahren des Standes der Technik zum Kalibrieren eines photothermischen Meßsystems sind sogenannte Referenzverfahren. Das heißt, es wird ein Temperaturverlauf oder eine Kennzahl einer zu analysierenden Materialschicht ermittelt, und es wird eine identische Kennzahl oder ein identischer Temperaturverlauf einer Referenzschicht gesucht bzw. durch Interpolation zwischen zwei Kennzahlen von Referenzschichten ermittelt. Durch Zuordnung der Kennzahlen der Referenzschichten zu den entsprechenden absoluten Schichtdicken kann anhand der berechneten Kennzahl der zu analysierenden Schicht deren absolute Schichtdicke direkt oder durch Interpolation gefunden werden.

Es ist offensichtlich, daß die Qualität der photothermischen Schichtdickenmessung somit stark von der Kalibrierung abhängt, was insbesondere heißt, daß die Referenzschichten sorgfältig hergestellt werden müssen. Hierfür ist ein enormer Zeitaufwand notwendig, und der Produktionsablauf wird durch die Kalibrierung stark gestört.

Es ist daher die Aufgabe der vorliegenden Erfindung, ein Verfahren und eine Vorrichtung zur photothermischen Analyse einer Materialschicht und insbesondere zur Schichtdickenmessung anzugeben, welche die beschriebenen Nachteile des Standes der Technik vermeiden und insbesondere ein einfacheres Verfahren zur Kalibrierung des photothermischen Meßsystems schaffen. Insbesondere soll das neue Kalibrierverfahren den Produktionsablauf bei der Werkstückbeschichtung so wenig wie möglich stören.

Diese Aufgabe wird durch ein Verfahren mit den Merkmalen von Anspruch 1 sowie durch eine Vorrichtung mit den Merkmalen von Anspruch 14 gelöst.

Die Erfindung sieht ein Verfahren zur photothermischen Analyse einer Materialschicht, insbesondere zur Schichtdickenmessung vor, bei dem die Oberfläche einer ersten Materialschicht sowie die Oberfläche einer zweiten Materialschicht mit elektromagnetischer Strahlung angeregt werden und von der Schichtoberfläche emittierte Wärmestrahlung mit einem ersten Temperaturverlauf bzw. mit einem zweiten Temperaturverlauf erfaßt wird. Zwischen dem ersten Temperaturverlauf und dem zweiten Temperaturverlauf wird ein Streckungsfaktor ermittelt, und der Streckungsfaktor wird als eine Kennzahl für ein Verhältnis zwischen der ersten und der zweiten Materialschicht verwendet wird. Bei dem erfindungsgemäßen Verfahren ist insbesondere die erste Materialschicht eine Referenzschicht und die zweite Materialschicht die zu analysierende Materialschicht.

Mit dem erfindungsgemäßen Verfahren kann das Meßsystem zumindest für einen gewissen Meßbereich auf der Grundlage einer einzigen Referenz-Messung an einer Referenzschicht kalibriert werden. Wie noch näher erläutert wird, kann die Schichtdicke der Materialschicht im Verhältnis zur Schichtdicke der Referenzschicht anhand des Streckungsfaktors zwischen den beiden zugehörigen Temperaturverläufen ermittelt werden. Zu dem kann die Kalibriermessung an einem Werkstück durchgeführt werden, das mit einer Soll-Schichtdicke beschichtet ist, so daß auf eine Über- oder Unterbeschichtung von Musterblechen verzichtet werden kann. Außerdem erübrigt sich eine Bestimmung der absoluten Schichtdicke nach dem Einbrennen, falls die Schichtdicke nur relativ zu einer Referenzschicht gemessen werden soll. Dadurch wird ein Verfahren zur photothermischen Analyse einer Materialschicht vorgesehen, das den Produktionsablauf bei der Beschichtung von Werkstücken nur im geringen Maße stört und hinsichtlich der Anzahl der durchzuführenden Messung sehr vorteilhaft ist.

Der Streckungsfaktor zwischen den beiden Temperaturverläufen wird vorzugsweise in bezug auf die Zeit ermittelt. Zwar ist auch ein Streckungsfaktor in Richtung der Amplitude realisierbar; da die Amplitude des Temperaturverlaufs jedoch abhängig von der Leistung und dem Einstrahlwinkel der Anregungsstrahlung, dem Meßabstand und ähnlichen Größen ist, wird vorzugsweise der zeitliche Streckungsfaktor verwendet, der von diesen Größen unabhängig und stabiler ist.

Abhängig von dem zeitlichen Streckungsfaktor kann auf einfache Weise das Verhältnis der Schichtdicken der beiden Materialschichten abgeleitet werden, für das die folgende Gleichung gilt:

$$\frac{L1}{L2} \approx \sqrt{\gamma_2}$$

wobei die L1 die Dicke der ersten Materialschicht ist, L2 die Dicke der zweiten Materialschicht ist und $\gamma_2$ der zeitliche Streckungsfaktor zwischen den Temperaturverläufen der beiden Materialschichten ist.

Der Streckungsfaktor kann auf verschiedene Weisen ermittelt werden. Zum Beispiel kann der zweite Temperaturverlauf der zu analysierenden Materialschicht auf den ersten Temperaturverlauf der Referenzschicht abgebildet werden, um den Streckungsfaktor zu ermitteln. In einem alternativen Verfahren oder zusätzlich hierzu kann eine Kennzahl für jeden Temperaturverlauf bestimmt werden, wobei der Streckungsfaktor abhängig von dieser Kennzahl ermittelt wird. Der zeitliche Streckungsfaktor wird in diesem Fall z.B. anhand der Zeitintervalle bestimmt, bei welchen die Kennzahlen für die verschiedenen Temperaturverläufe übereinstimmen. Hierfür wird vorzugsweise, jedoch nicht notwendig der erste Temperaturverlauf der Referenzschicht gespeichert.

Wenn die absolute Dicke der Refernezschicht bekannt ist, kann abhängig davon auch die absolute Dicke der zu analysierenden Materialschicht ermittelt werden. Bei vielen Anwendungen kann es jedoch genügen, zu ermitteln, ob, und wenn ja, wieviel die zu analysierende Schicht von einer Referenzschicht prozentual abweicht, die z. B. eine Soll-Schichtdicke aufweisen kann.

Um einen gut auswertbaren Temperaturverlauf zu erhalten, sollte die Oberfläche der Materialschichten mit einer Sprungfunktion der elektromagnetischen Strahlung angeregt werden, wobei jedoch auch eine modulierte Anregungsquelle verwendet werden kann, die z. B. mehrere Anregungsimpulse ausgibt.

Die Erfindung sieht somit ein Verfahren vor, mit dem bei minimalen Aufwand zum Kalibrieren des Meßsystems anhand nur einer Referenzschicht durch Vergleichen von zwei Temperaturverläufen eine Materialschicht charakterisiert und insbesondere ihre Schichtdicke bestimmt werden kann. Insbesondere bei der von der Erfindung bevorzugten Verwendung des zeitlichen Streckungsfaktors müssen darüber hinaus die Leistung der Anregungsquelle sowie die Charakteristik des Detektors oder der Abstand zwischen Anregungsquelle, Werkstück und Detektor nicht bekannt und, bei geeigneter Normierung der Temperaturkurven, nur während des kurzen Meßintervalls konstant sein.

Die Erfindung ist im folgenden anhand bevorzugter Ausführungsformen mit Bezug auf die Zeichnungen näher erläutert. In den Figuren zeigen:

Figur 1      eine Vorrichtung zur photothermischen Analyse einer Materialschicht gemäß der Erfindung;

Figur 2      einen Ausschnitt eines Werkstücks mit einer Materialschicht, deren Dicke bestimmt werden soll;

Figur 3      den zeitlichen Temperaturverlauf der emittierten Wärmestrahlung zweier unterschiedlicher Materialschichten; und

Figur 4      den gleichen zeitlichen Temperaturverlauf wie Figur 2, wobei zur Illustrierung des erfindungsgemäßen Verfahrens Streckungsvektoren dargestellt sind.

Die Erfindung ist im folgenden anhand des Beispiels einer Schichtdickenmessung beschrieben. Sie ist jedoch auch für die Analyse anderer Eigenschaften der Materialschicht, wie deren Zusammensetzung, anwendbar.

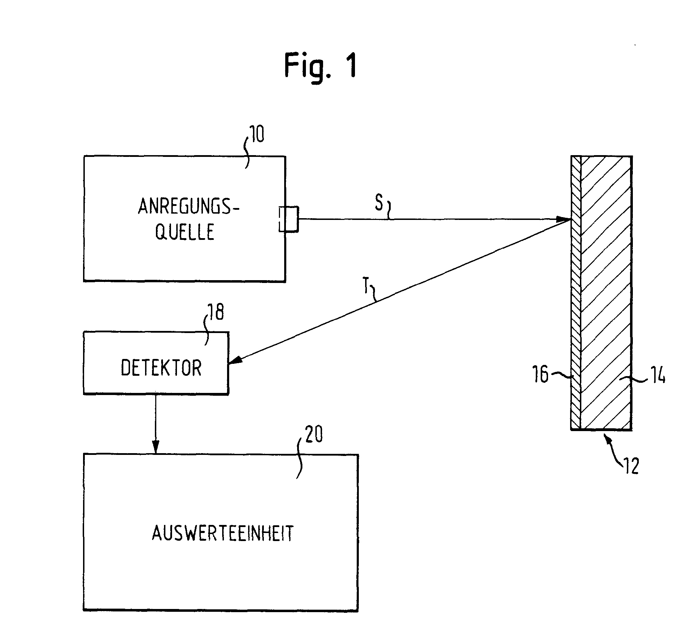

Figur 1 zeigt schematisch in Form eines Blockdiagramms eine Vorrichtung zur photothermischen Analyse einer Materialschicht gemäß der Erfindung. Die Vorrichtung weist eine Anregungsquelle 10 zum Erzeugen einer elektromagnetischen Anregungsstrahlung S auf. Die Anregungsquelle 10 ist vorzugsweise eine Laserquelle, wobei jedoch auch Infrarotlicht oder eine elektromagnetische Anregungsstrahlung in einem anderen Wellenlängenbereich verwendet werden kann. Der Anregungsstrahl S trifft auf ein Werkstück 12, das ein Substrat und eine Beschichtung 16 aufweist. Durch die Anregungsstrahlung S wird die Oberfläche des Werkstücks 12 erwärmt und gibt Wärmestrahlung T ab, die von einem Detektor 18 erfaßt wird. Der Detektor 18 wandelt die erfaßte Wärmestrahlung T in elektrische Signale um und gibt diese an eine Auswerteeinheit 20 weiter.

Die in Figur 1 gezeigte Auswerteeinheit berechnet den Streckungsfaktor und ermittelt daraus die gesuchte Schichtdicke, wie weiter unten noch erläutert ist.

Bei dem erfindungsgemäßen Verfahren wird von der Anregungsquelle 10 Licht mit geeigneter Wellenlänge auf die zu untersuchende Schicht 16 gestrahlt. Dabei kann eine quasi kontinuierliche Lichtquelle verwendet werden, wobei die Einstrahlung höchstens so lange dauern sollte, daß die Schicht 16 nicht negativ beeinflußt wird oder daß bei Verwendung eines Lasers die Vorschriften bezüglich Lasersicherheit eingehalten werden können. Die Anregungsstrahlung wird vorzugsweise in Form einer Sprungfunktion aufgebracht, und spätestens vor einer neuen Messung wird die Anregungsquelle 10 abgeschaltet, bzw. die Anregungsstrahlung S unterbrochen. Falls an einer Stelle des Werkstücks 12 die Schicht 16 mehrmals gemessen werden soll, sollte zwischen den Messungen eine Zeitspanne zur Abkühlung der Meßstelle berücksichtigt werden.

Weiter sollte die Meßzeit mindestens gleich oder größer der thermischen Diffusionszeit $\tau$ sein:

$$\tau = \frac{l_S^2}{\alpha}$$

mit

$$\alpha = \frac{k}{\rho \cdot c}$$

Dabei bedeuten:

$\alpha$ = thermische Diffüsivität (m$^2$/s)
k = Wärmeleitfähigkeit (W/(m K))
$\rho$ = Massendichte (kg/m$^3$)
c = spezifische Wärmekapazität (J/(kg K))
$l_S$ = Schichtdicke (m)

Die Anregungsdauer ist für das erfindungsgemäße Auswerteverfahren somit ein unkritischer Faktor.

Die durch die Anregung erzeugte Wärmestrahlung wird mit einem geeigneten Detektor 18 erfaßt, d.h. der zeitliche Temperaturverlauf wird gemessen. Dabei kann bei der quasi kontinuierlichen Anregung im allgemeinen von Beginn bis zum Ende der Anregung gemessen werden.

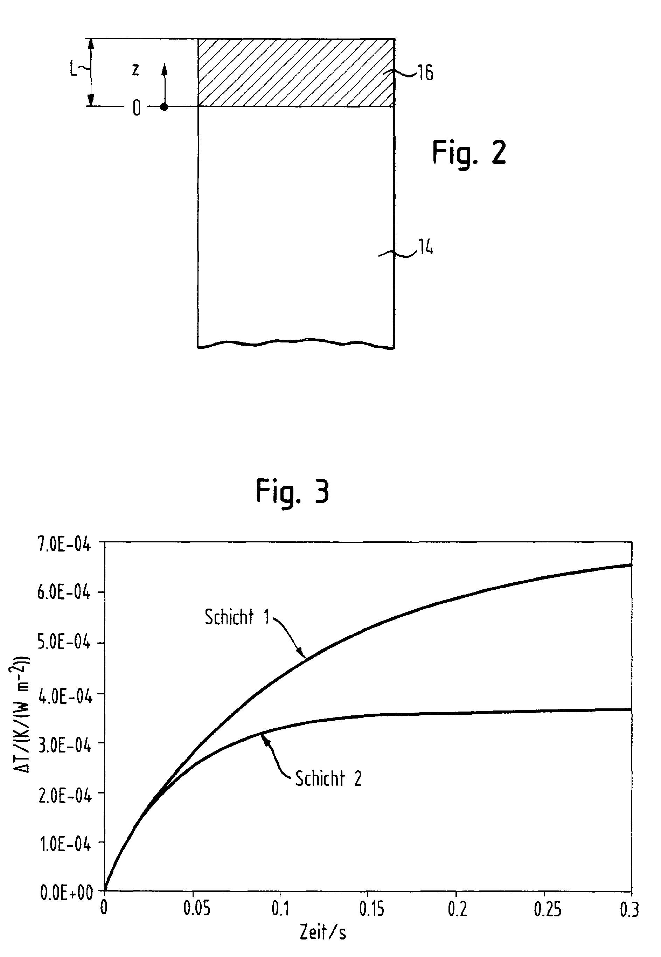

Die Figur 2 zeigt einen typischen zeitlichen Temperaturverlauf für zwei unterschiedliche Schichtdicken.

Die folgende Beschreibung bezieht sich auf die bevorzugte Ausführungsform der Erfindung, bei der der Temperaturanstieg der emittierten Wärmestrahlung nach einem sprungförmigen Einschalten der elektromagnetischen Anregungsstrahlung ausgewertet wird, so daß auch die Kalibrierung in der Aufheizphase anhand des Temperaturanstiegs erfolgt. Grundsätzlich ist die Erfindung jedoch auch auf die Abkühlphase anwendbar, wenn nach dem Abschalten der elektromagnetischen Anregung der Temperaturabfall ausgewertet wird.

Grundlage für das erfindungsgemäße Verfahren ist die thermische Diffusionsgleichung (1), die das betrachtete System aus elektromagnetischer Anregung und emittierter Wärmestrahlung des beispielsweise in Figur 2 gezeigten Werkstücks mathematisch beschreibt:

$$\nabla^2 T(x,y,z,t) - \frac{1}{\alpha} \cdot \frac{\partial T(x,y,z,t)}{\partial T} = \frac{H(x,y,z,t)}{k} \tag{1}$$

mit

$T(x,y,z,t)$ = Temperaturerhöhung gegenüber einer Referenztemperatur $T_0$
$H(x,y,z,t)$ = eingebrachte Wärme pro Volumen und Zeit
$\alpha$ = thermische Diffüsivität (m$^2$/s):

$$\alpha = \frac{k}{\rho \cdot c}$$

k = Wärmeleitfähigkeit (W/(m K))
$\rho$ = Massendichte (kg/m$^3$)

c = spezifische Wärmekapazität (J/(kg K))

H(x,y,z,t) ergibt sich aus der einfallenden Strahlungsleistung $I_0$ der Anregungsquelle 10 und der Absorption in der Schicht 16. Der exponentielle Abfall in der Schicht 16 wird mit dem Absorptionskoeffizienten $\beta$ beschrieben. Zudem kann vereinfacht angenommen werden, daß für dünne Schichten und eine übliche Anregungsfläche die eindimensionale Diffusionsgleichung gilt. Somit ergibt sich folgende Gleichung (2) für das System:

$$\frac{\partial^2 T}{\partial z^2}(z,t) - \frac{1}{\alpha}\cdot\frac{\partial T}{\partial t}(z,t) = -\frac{\beta\, I_0\, \exp(-\beta\cdot z)}{k} \tag{2}$$

Diese Gleichung (2) beschreibt den zeitlichen und örtlichen Temperaturverlauf bei einer Anregung mit einer Strahlungsleistung $I_0$.

Gemäß dieser Differentialgleichung (2) wird der Temperaturverlauf von den drei Größen $\alpha$, $\beta$ und $I_0$ bestimmt. Für das vorgeschlagene Verfahren wird angenommen, daß die Größen $\alpha$ und $\beta$ innerhalb der Schichten konstant sind.

Mit Hilfe der Gleichung (2) und den bekannten Größen $\alpha$, $\beta$ und $I_0$ läßt sich der Temperaturverlauf für ein Schichtsystem, wie in Figur 2 gezeigt, bestehend aus einem Substrat 14 und einer Schicht 16 berechnen. Die folgende Berechnung wurde für eine Schicht 1 mit einer Schichtdicke von 180 µm und eine Schicht 2 mit einer Schichtdicke von 110 µm durchgeführt. Als Substrat wurde Stahl mit einer unendlichen Dicke vorausgesetzt, d. h. die Dicke des Substrats 14 ist viel größer als diejenige der Schicht 16. Weiter wurden folgende Werte angenommen:

$\alpha = 1.19\cdot 10^{-7}$ m²/s
k = 0.20 W/(m K)
$\beta = 20000$ m⁻¹
$I_0 = 1$ W/m²

Figur 3 zeigt die berechneten Temperaturverläufe bzw. -anstiege für die Schicht 1 mit einer Dicke von 180 um und die Schicht 2 mit einer Dicke von 110µm.

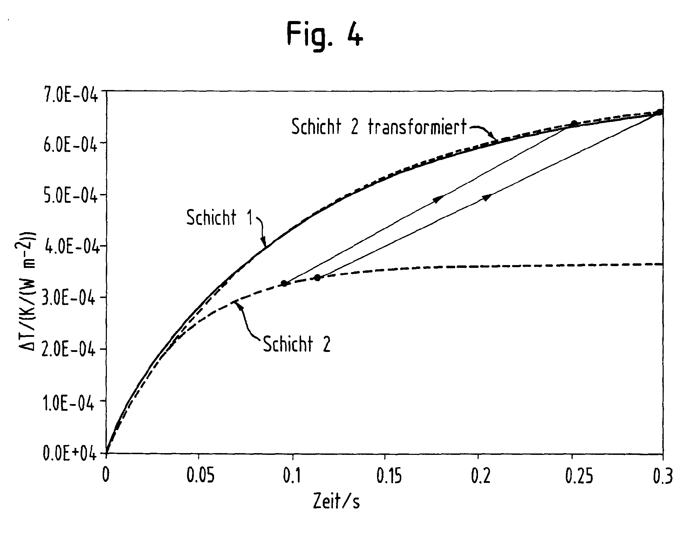

Die Aufgabe besteht nun darin, die Schichtdicke der Schicht 2 zu bestimmen. Erfindungsgemäß wird dies dadurch gelöst, daß eine Abbildung gefunden wird, welche den gemessenen Temperaturanstieg der Schicht 2 in den Temperaturanstieg der Kalibriermessung der Schicht 1 überführt. Hierzu wird folgender Lösungsansatz vorgeschlagen: Durch eine Streckung in der Zeit und in der Amplitude wird der Temperaturverlauf der Schicht 2 auf den Temperaturverlauf der Kalibrierschicht 1 abgebildet. Figur 4 zeigt diese Abbildung. Die Streckungen in der Zeit und der Amplitude werden so gewählt, das die beiden Kurven möglichst gut übereinstimmen. Dies kann beispielsweise mit der Methode der kleinsten Fehlerquadrate realisiert werden.

Die Erfindung sieht ein Verfahren zur photothermischen Analyse der Materialschichten und insbesondere zur Schichtdickenmessung vor, das aufgrund einer einzigen Messung an einer Referenzschicht kalibriert werden kann. Dies bedeutet beispielsweise in Figur 3, daß einer der beiden Temperaturverläufe 1, 2 zur Kalibrierung verwendet wird, während der andere Temperaturverlauf dann zur Charakterisierung der zugehörigen Materialschicht herangezogen wird. Bei dem vorliegenden Beispiel soll der Temperaturverlauf bzw. der Temperaturanstieg der Schicht 1 als Referenzgröße dienen. Die Schicht 2 ist in diesem Fall diejenige Materialschicht, deren Schichtdicke bestimmt werden soll.

Die Erfindung ist nicht auf eine bestimmte Art der Ermittlung des Streckungsfaktors begrenzt. So kann der Streckungsfaktor beispielsweise auch in Anlehnung an das in der deutschen Patentanmeldung derselben Anmelderin mit demselben Anmeldetag und mit dem Titel "Verfahren und Vorrichtung zur photothermischen Analyse einer Materialschicht, insbesondere zur Schichtdickenmessung" beschriebene Normierungsverfahren ermittelt werden. Auf diese Anmeldung wird Bezug genommen. Bei dem dort beschriebenen Verfahren wird der Temperaturverlauf der erfaßten Wärmestrahlung normiert, und aus dem normierten Temperaturverlauf wird eine Kennzahl zur Charakterisierung der Materialschicht abgeleitet. Gemäß einer bevorzugten Ausführungsform wird für die Normierung ein erstes Integral des Temperaturverlaufs der erfaßten Wärmestrahlung in einem Meßintervall und ein zweites Integral des Temperaturverlaufs in einem Normierungsintervall berechnet. Der Quotient zwischen dem ersten und dem zweiten Integral dient als Kennzahl für die Charakterisierung der Materialschicht. Wenn nun für zwei unterschiedliche Schichten, wie die Schichten 1 und 2 der Fig. 3, die Zeitpunkte ermittelt werden, zu denen die Kennzahlen übereinstimmen, so kann ein zeitlicher Streckungsfaktor bestimmt werden.

Der sich durch die Abbildung ergebende Streckungsfaktor $\gamma_2$ in der Zeit enthält die gesuchte Information über die Schichtdicke 2, da in guter Näherung folgende Beziehung gilt:

$$\frac{L_1}{L_2} \approx \sqrt{\gamma_2} \tag{3}$$

wobei $L_1$ und $L_2$ die Schichtdicken sind.

Für das obige Beispiel ergibt sich ein Streckungsfaktor von $\gamma_2 = 2{,}648$. Somit resultiert daraus gemäß Gleichung (3) ein Verhältnis $L_1/L_2 = 1{,}627$. Das heißt, daß die Schicht 2 gegenüber der Schicht 2 um diesen Faktor dünner ist. Ist nun die Dicke der Kalibrierschicht 1 bekannt, in diesem Beispiel 180 $\mu$m, ergibt sich für die Schicht 2 eine Dicke von 110,61 $\mu$m. Dies bedeutet, gegenüber dem für die Rechnung der Temperaturverläufe verwendeten Wert von 110 um eine Abweichung von + 0.5 Prozent.

Der getroffene Lösungsansatz läßt sich mathematisch begründen. Dazu wird zunächst von einem idealisierten System ausgegangen. Es wird angenommen, daß die Absorption der Anregung vollständig in der Oberfläche erfolgt. Dies läßt sich durch

$$H(z) = I_0\,\delta(z) \tag{4}$$

beschreiben.

Man betrachte nun zwei Schichtsysteme gemäß Fig. 2 mit z und z', wobei

$$z' = \gamma_1\,z \tag{5}$$

sei.

D.h. das Verhältnis der Schichtdicken $L_1$ und $L_2$ entspricht dem Faktor $\gamma_1$.

Nun gilt:

$$\partial z'^2 = {\gamma_1}^2\,\partial z^2 \tag{6}$$

Gleichungen (4) und (6) in Gleichung (2) eingesetzt ergibt:

$$\frac{\partial^2 T'}{\partial z'^2}(z',t) - \frac{1}{\alpha}\cdot\frac{1}{{\gamma_1}^2}\,\frac{\partial T'}{\partial t}(z',t) = -\frac{1}{\gamma_1}\,\frac{I'_0\,\delta(z')}{k} \tag{7}$$

Betrachtet man dagegen eine zeitliche Streckung mit:

$$t' = \frac{1}{\gamma_2}\,t \tag{8}$$

So gilt:

$$\partial t' = \frac{1}{\gamma_2}\,\partial t \tag{9}$$

Gleichungen (4) und (9) in Gleichung (2) eingesetzt ergibt:

$$\frac{\partial^2 T}{\partial z^2}(z,t') - \frac{1}{\alpha}\cdot\frac{1}{\gamma_2}\,\frac{\partial T}{\partial t'}(z,t') = -\frac{I'_0\,\delta(z)}{k} \tag{10}$$

Ein Vergleich der Gleichungen (7) und (10) zeigt, daß bei Berücksichtigung der Amplitudenskalierung $1/\gamma_1$ Lösungen existieren, die diese beiden Differentialgleichungen lösen. Somit erfüllen die beiden Streckungsfaktoren $\gamma_1$ und $\gamma_2$ folgende Relation:

$$\gamma_1{}^2 = \gamma_2 \tag{11}$$

Auf Grund dieser Relation (11) ist nun auch das Verhältnis zwischen der Schichtdicke der Kalibrierschicht 1 und der Schichtdicke der zu analysierenden Schicht 2 wie folgt definiert:

$$\frac{L_1}{L_2} = \sqrt{\gamma_2} \tag{12}$$

$\gamma_2$ wird als der zeitliche Streckungsfaktor bezeichnet.

Weiter zeigt Gleichung (7), daß die Amplitude bei einer räumlichen Streckung mit $1/\gamma_1$ skaliert wird. Somit wäre es ebenfalls denkbar, die Amplituden der Temperaturverläufe zur Kalibrierung und Bestimmung der Schichtdicken zu verwenden. Darauf wird hier aber nicht weiter eingegangen, da die Amplitude gegenüber dem Meßabstand, Einstrahlwinkel usw. relativ empfindlich ist.

Gemäß Gleichung (12) ist bei bekannter Streckung mit dem Faktor $\gamma_2$ das Verhältnis der Schichtdicken der Schichten 1 und 2 genau definiert. Dies ist jedoch nur bei einer idealisierten vollständigen Oberflächenabsorption streng gültig. In der Realität ist jedoch auch mit einer Absorption in der Tiefe zu rechnen. Dies zeigt bereits Gleichung (2) mit der Anregung $H(z) = \beta\, I_0 \exp(-\beta\, z)$. Wird mit dieser Anregung eine räumliche Streckung durchgeführt, ergibt sich anstelle von Gleichung (7) folgende Differentialgleichung:

$$\frac{\partial^2 T}{\partial z'^2}(z',t) - \frac{1}{\alpha}\cdot\frac{\partial T}{\partial t}(z',t) = -\frac{1}{\gamma'_2}\,\frac{\beta\, I'_0 \exp(-\frac{\beta}{\gamma_1}z')}{k} \tag{13}$$

Gleichung (13) zeigt, daß bei einem realitätsnahen Modell die Anregung nicht nur skaliert wird, sondern zusätzlich eine Beeinflussung des exponentiellen Abfall in z-Richtung erfolgt. Somit lautet die Gleichung (12) korrekterweise wie bereits in der oben angegebenen Gleichung (3):

$$\frac{L_1}{L_2} \approx \sqrt{\gamma_2}$$

Untersuchungen haben gezeigt, daß dieses Verfahren gegenüber Änderungen des Absorptionskoeffizienten $\beta$ relativ unempfindlich ist. Für das Verfahren wird daher eine oberflächennahe Absorption angenommen. Zudem wird nur ein eindimensionales System betrachtet. Es zeigte sich aber, daß die Gleichung (3) trotz dieser Vereinfachungen in der Praxis anwendbar ist. Dabei muß darauf geachtet werden, daß der Meßbereich nicht zu extrem gewählt wird.

Mit zunehmendem Unterschied zwischen den Schichtdicken der Kalibrierschicht 1 und der zu bestimmenden Schicht 2 nimmt der Einfluß der Vereinfachungen zu, d.h. der Meßfehler steigt.

Auf der Grundlage dieser Überlegungen wird nun erfindungsgemäß folgendes Verfahren vorgeschlagen:

1. Eine Kalibriermessung wird mit dem photothermischen Verfahren durchgeführt, d.h. der zeitliche Temperaturverlauf bzw. -anstieg der Schicht 1 wird gemessen und abgespeichert.

2. Die Messung der zu bestimmenden Schicht 2 wird ebenfalls mit dem photothermischen Verfahren durchgeführt. Dieser Temperaturverlauf wird gegebenenfalls abgespeichert.

3. Der gemessene Temperaturanstieg der Schicht 2 wird zeitlich und in der Amplitude gestreckt, so daß dieser Temperaturverlauf mit dem Verlauf der Kalibriermessung (Schicht 1) übereinstimmt oder die Abweichung der Kurven minimal wird (z.B. mit einer geeigneten Ausgleichsrechnung), siehe auch Fig. 4. Dies liefert den zeitlichen Streckungsfaktor $\gamma_2$.

Der oben erläuterte Vergleich der Temperaturverläufe ist eine mögliche Variante zur Bestimmung des Streckungsfaktors. Grundsätzlich kann jedes von der Amplitude unabhängige Verfahren, das eine eindeutige Kennzahl liefert, zur Bestimmung der Streckungsfaktoren verwendet werden. In diesem Fall würden die Kennzahlen durch zeitliche Streckung zur Deckung gebracht und der zeitliche Streckungsfaktor $\gamma_2$ bestimmt.

Bereits nach diesen Verfahrensschritten kann eine Aussage über die Schichtdicken gemacht werden, da sich die Schichtdicken gemäß Gleichung (3) wie folgt verhalten:

$$\frac{L_1}{L_2} \approx \sqrt{\gamma_2}$$

D.h. falls keine absolute Messung der Schichtdicke gefordert wird, erhält man bereits nach diesen drei ersten Schritten ein Maß für die prozentuale Abweichung der gemessenen Schichtdicke (Schicht 2) gegenüber der Schichtdicke der Kalibriermessung (Schicht 1).

Wird jedoch eine Messung der absoluten Schichtdicke gewünscht, sollten noch folgende zusätzliche Schritte durchgeführt werden:

4. Einbrennen der Referenzschicht.

5. Ausmessen der sich ergebenden Schichtdicke mit konventioneller Meßtechnik (z.B. Wirbelstrommessung).

6. Abspeichern der gemessenen Schichtdicke der Referenzschicht (Schicht 1).

Mit Gleichung (3) und der bekannten Schichtdicke der Referenzschicht 1 kann einfach auf die gesuchte absolute Schichtdicke der gemessenen Schicht 2 geschlossen werden.

Wie bereits erwähnt, ist das beschriebene Verfahren auf Grund der vereinfachenden Annahmen nicht über einen beliebig großen Meßbereich einsetzbar. Der Meßbereich wird letztlich durch den tolerierbaren Meßfehler bestimmt. Wird ein großer Meßbereich mit einem kleinen Meßfehler gefordert, kann das Verfahren beispielsweise durch folgende Ausführung verbessert werden:

Anstelle nur einer Kalibriermessung werden mehrere Kalibriermessungen mit unterschiedlichen Schichtdikken, welche den gewünschten Meßbereich abdecken, durchgeführt. Der Temperaturverlauf der zu untersuchenden Schicht wird wie oben abgespeichert. Dieser Temperaturverlauf wird nun auf die Verläufe der Kalibriermessungen wie oben beschrieben abgebildet. Dies ergibt für jede Kurve der Kalibriermessungen einen zeitlichen Streckungsfaktor. Die tatsächliche Kalibrierung wird nun beispielsweise mit demjenigen Kalibrierpunkt ausgeführt, bei dem der zeitliche Streckungsfaktor minimal ist. Denkbar ist aber auch, daß die Kalibrierung mit zwei oder mehr dieser Kalibrierpunkte durchgeführt wird.

Die Erfindung kann mit einer Vorrichtung realisiert werden, wie sie in Fig. 1 gezeigt ist. Die Erfindung kann auch in einem Computerprogramm zur Auswertung der mit dem Detektor 18 erfaßten Temperaturverläufe realisiert werden. Die Auswerteeinheit 20 kann somit in Hardware oder Software ausgeführt sein. Das Computerprogramm kann auf einem Datenträger gespeichert sein und die beanspruchten Verfahrensschritte auf einer elektronischen Datenverarbeitungsvorrichtung ausführen.

Die in der vorstehenden Beschreibung, den Ansprüchen und den Zeichnungen offenbarten Merkmale können sowohl einzeln als auch in beliebiger Kombination zur Realisierung der Erfindung in ihren verschiedenen Ausführungsformen von Bedeutung sein.

**Patentansprüche**

1. Verfahren zur photothermischen Analyse einer Materialschicht (16), insbesondere zur Schichtdickenmessung, bei dem die Oberfläche einer ersten Materialschicht (16) mit elektromagnetischer Strahlung (S) angeregt und von der Schichtoberfläche emittierte Wärmestrahlung (T) mit einem ersten Temperaturverlauf erfaßt wird, und die Oberfläche einer zweiten Materialschicht (16) angeregt und von der Schichtoberfläche emittierte Wärmestrahlung (T) mit einem zweiten Temperaturverlauf erfaßt wird,
**dadurch gekennzeichnet**, daß
ein Streckungsfaktor zwischen dem ersten Temperaturverlauf und dem zweiten Temperaturverlauf ermittelt wird und der Streckungsfaktor als eine Kennzahl für ein Verhältnis zwischen der ersten und der zweiten Materialschicht (16) verwendet wird.

2. Verfahren nach Anspruch 1, **dadurch gekennzeichnet, daß** als erste Materialschicht eine Referenzschicht verwendet wird und als zweite Materialschicht die zu analysierende Materialschicht (16) verwendet wird.

3. Verfahren nach Anspruch 1 oder 2, **dadurch gekennzeichnet**, daß der Strekkungsfaktor ein zeitlicher Streckungsfaktor $\gamma_2$ ist.

4. Verfahren nach einem der vorangehenden Ansprüche, **dadurch gekennzeichnet**, daß abhängig von dem Strek-

kungsfaktor das Verhältnis der Schichtdicken abgeleitet wird.

5. Verfahren nach einem der vorangehenden Ansprüche, **dadurch gekennzeichnet**, daß die Schichtdicke der zweiten Materialschicht abhängig von der ersten Materialschicht gemäß der folgenden Gleichung bestimmt wird:

$$\frac{L_1}{L_2} \approx \sqrt{\gamma_2}$$

wobei L1 die Dicke der ersten Materialschicht ist, L2 die Dicke der zweiten Materialschicht ist und $\gamma_2$ der zeitliche Streckungsfaktor ist.

6. Verfahren nach Anspruch 1 oder 2, **dadurch gekennzeichnet**, daß der Strekkungsfaktor $\gamma_1$ auf die Amplituden der Temperaturverläufe bezogen ist.

7. Verfahren nach Anspruch 6, **dadurch gekennzeichnet, daß** die Schichtdicke der zweiten Materialschicht abhängig von der ersten Materialschicht gemäß der folgenden Gleichung bestimmt wird:

$$\frac{L_1}{L_2} \approx \sqrt{\gamma_2}$$

wobei L1 die Dicke der ersten Materialschicht ist, L2 die Dicke der zweiten Materialschicht ist und $\gamma_1$ der Amplitudenstreckungsfaktor ist.

8. Verfahren nach einem der vorangehenden Ansprüche, **dadurch gekennzeichnet**, daß der zweite Temperaturverlauf auf den ersten Temperaturverlauf abgebildet wird, um den Streckungsfaktor zu ermitteln.

9. Verfahren nach einem der vorangehenden Ansprüche, **dadurch gekennzeichnet**, daß für jeden Temperaturverlauf eine amplitudenunabhängige Kennzahl bestimmt wird, wobei der Streckungsfaktor abhängig von den Kennzahlen bestimmt wird.

10. Verfahren nach Anspruch 9, **dadurch gekennzeichnet**, daß der zeitliche Strekkungsfaktor anhand der Zeitintervalle bestimmt wird, in denen die Kennzahlen übereinstimmen.

11. Verfahren nach einem der vorangehenden Ansprüche, **dadurch gekennzeichnet**, daß wenigstens der erste Temperaturverlauf gespeichert wird.

12. Verfahren nach Anspruch 11, **dadurch gekennzeichnet, daß** die absolute Dicke der Referenzschicht und abhängig davon die absolute Dicke der zu analysierenden Materialschicht (16) ermittelt wird.

13. Verfahren nach einem der vorangegangenen Ansprüche, **dadurch gekennzeichnet**, daß die Oberflächen jeweils mit einer Sprungfunktion der elektromagnetischen Strahlung (S) angeregt werden.

14. Vorrichtung zur photothermischen Analyse einer Materialschicht, insbesondere zur Schichtdickenmessung, mit

einer Anregungsquelle (10) zum Anregen der Oberflächen wenigstens einer ersten und einer zweiten Materialschicht (16);
einem Detektor (18) zur Erfassen der von den Schichtoberflächen emittierten Wärmestrahlung (T), die einen ersten bzw. einen zweiten Temperaturverlauf aufweist; und
eine Auswerteeinheit (20);

**dadurch gekennzeichnet**, daß
die Auswerteeinheit (20) einen Streckungsfaktor zwischen dem ersten Temperaturverlauf und dem zweiten Temperaturverlauf ermittelt, wobei der Streckungsfaktor als eine Kennzahl für ein Verhältnis zwischen der ersten und der zweiten Materialschicht (16) verwendbar ist.

15. Computerprogramm zur photothermischen Analyse einer Materialschicht (16), insbesondere zur Schichtdickenmessung, wobei die Oberfläche einer ersten Materialschicht mit elektromagnetischer Strahlung angeregt und von der Schichtoberfläche emittierte Wärmestrahlung mit einem ersten Temperaturverlauf erfaßt wird, und die Oberfläche einer zweiten Materialschicht angeregt und von der Schichtoberfläche emittierte Wärmestrahlung mit einem zweiten Temperaturverlauf erfaßt wird,

**dadurch gekennzeichnet**, daß das Computerprogramm folgende Schritte ausführt:

Berechnen eines Streckungsfaktors zwischen dem ersten Temperaturverlauf und dem zweiten Temperaturverlauf und Verwenden des Streckungsfaktors als eine Kennzahl für ein Verhältnis zwischen der ersten und der zweiten Materialschicht.

# Fig. 1

ANREGUNGS-
QUELLE

DETEKTOR

AUSWERTEEINHEIT

S

T

Fig. 2

Fig. 3

# Fig. 4